# EUROPEAN PATENT APPLICATION

(11) **EP 3 495 179 A1**
(43) Date of publication of application: **12.06.2019**
(21) Application number: 18210895.1
(22) Date of filing: 06.12.2018
(51) Int. Cl.: B60H 1/00

(54) **DUAL-LAYER-FLOW AIR CONDITIONER FOR VEHICLE**

(30) Priority: 08.12.2017 JP 2017236439
(71) Applicant: Valeo Japan Co., Ltd., Saitama 360-0193 (JP)
(72) Inventor: IZUMIKAWA, Shiro, SAITAMA, 360-0193 (JP); YOSHIZAKI, Hisayoshi, SAITAMA, 360-0193 (JP); TAJIMA, Kentaro, SAITAMA, 360-0193 (JP)
(74) Representative: Metz, Gaëlle

(57) **Abstract**

A dual-layer-flow air conditioner (1) for a vehicle includes an intake unit, a blower unit (2), a duct section (3), a flow turning section (4), a partition plate (5), and a temperature adjustment unit. The dual-layer-flow air conditioner for a vehicle includes a pressure adjustment configuration located in at least one position among a boundary position (7) between a first partition portion (5A) and a second partition portion (5B) of the partition plate, a position upstream of the boundary position, and a position downstream of the boundary position, and configured to reduce a pressure difference between an upper space (11A) and a lower space (11B) of the flow turning section (4).

## Description

### BACKGROUND OF THE INVENTION

### 1. Field of the Invention

The present invention relates to an air conditioner for a vehicle including a partition plate to divide an air passage in an air conditioning case into a first passage for outside air and a second passage for inside air so that the air conditioner can be set in what is called an inside and outside air dual-layer-flow mode.

### 2. Description of the Related Art

In order to meet demands for improving product qualities, air conditioners for a vehicle have been innovated to make effective each of heating performance, cooling performance, and windshield defogging performance. Recently, in accordance with increasing needs for reducing fuel consumption, it is considered inefficient to take in outside air at the time of heating and discharge the heated air wastefully from the vehicle, and consequently, the number of vehicles that adopt an inside air mixing system to minimize air discharge is increasing. However, to make the heating performance compatible with the windshield defogging performance, there is a limit to a method of simply increasing an inside air mixing rate. As a method of maintaining the heating performance more efficiently without sacrificing the windshield defogging performance, air conditioners for a vehicle which are of an inside and outside air dual-layer-flow system have been developed in which the outside air is blown to a defroster vent whereas the inside air is blown to a foot vent.

Air conditioners for a vehicle that can be set in the inside and outside air dual-layer-flow mode are disclosed (see, for example, Patent Literature 1). An air conditioner for a vehicle disclosed in Patent Literature 1 includes: a blower unit capable of simultaneously blowing inside and outside air while separating the inside and outside air into upper and lower layers; and an air conditioning unit that accommodates an evaporator, a heater core, and various doors. It is disclosed that to eliminate or minimize mixture of the inside air blown from the blower unit with the outside air when passing through the evaporator, partition walls are formed with step portions "a" and "b" (illustrated in Fig. 1 of Patent Literature 1).

The air conditioner for a vehicle disclosed in Patent Literature 1 is an example of what is called a transversely mounted air conditioner in which the blower unit and the air conditioning unit are arranged in a transverse direction (a lateral direction) of the vehicle. More specific examples of the transversely mounted air conditioner are disclosed (see, for example, Patent Literature 2).

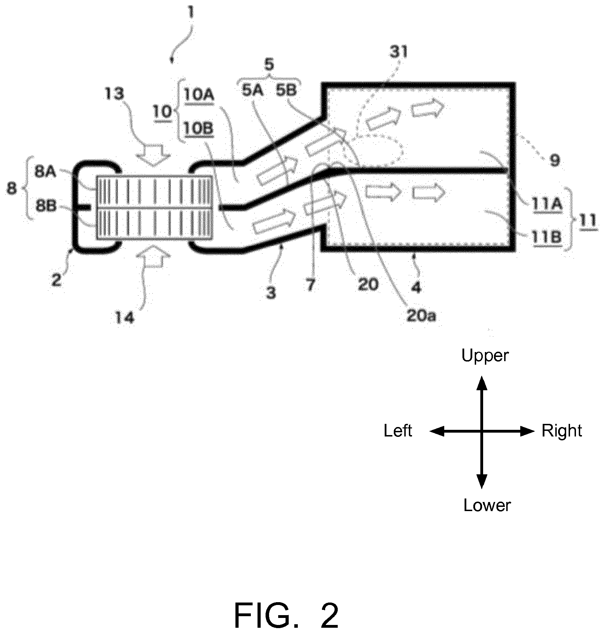

An air conditioner disclosed in Patent Literature 2 includes a blower and an air conditioning unit arranged in a lateral direction of the blower, referring to Fig. 2 in particular. The air, which has been taken in to the blower, is first blown out in the lateral direction of the vehicle, and subsequently turned to a fore-and-aft direction of the vehicle by a lateral wall 9 of a case, and then, passed through an evaporator 23. The air, which has passed through the evaporator 23, passes through a heater core 24, as necessary, to be adjusted in temperature, and is blown out into a cabin.

Patent Literature 2 also discloses that to make the blown air uniformly flow into the evaporator 23, a partition wall 28 is provided to divide an upstream side of the evaporator 23 into a plurality of passages (upper and lower passages in Fig. 2), and that a flow rate adjustor 26 (rotation damper) is provided to adjust amounts of the blown air to the individual passages.
Patent Literature 1 : JP-A-11-208240
Patent Literature 2 : JP-A-11-245644

In the dual-layer-flow air conditioner for a vehicle in which the air is divided into an outside-air layer and an inside-air layer, it is ideal that the air in the inside-air passage and the air in the outside-air passage taken in from the respective intake portions is blown out to ventilation, defroster, and foot vents without mixing with each other. However, in consideration of a configuration of the HVAC unit, it involves technical difficulty to constantly keep movable components and components in the vicinity of a heat exchanger hermetically sealed in two layers.

In the air conditioner for a vehicle disclosed in Patent Literature 1, the units are located at such vertical positions that the center of an outlet of the blower unit and the center of the evaporator in the air conditioning unit are substantially flush with each other. Accordingly, a partition wall 15a extending from the blower toward the evaporator is substantially horizontal. Meanwhile, in the air conditioner for a vehicle disclosed in Patent Literature 2, the blower unit is located at a lower level than the air conditioning unit. In this manner, a vertical positional relationship of the evaporator in the air conditioning unit with respect to the outlet of the blower unit is variable in accordance with layout conditions of the vehicle.

The inventors have found that in the case where the air conditioner for a vehicle disclosed in Patent Literature 1 has the configuration in which the blower unit is located at a relatively lower level than the air conditioning unit, as in the air conditioner for a vehicle disclosed in Patent Literature 2, the following unfavorable circumstances occur.

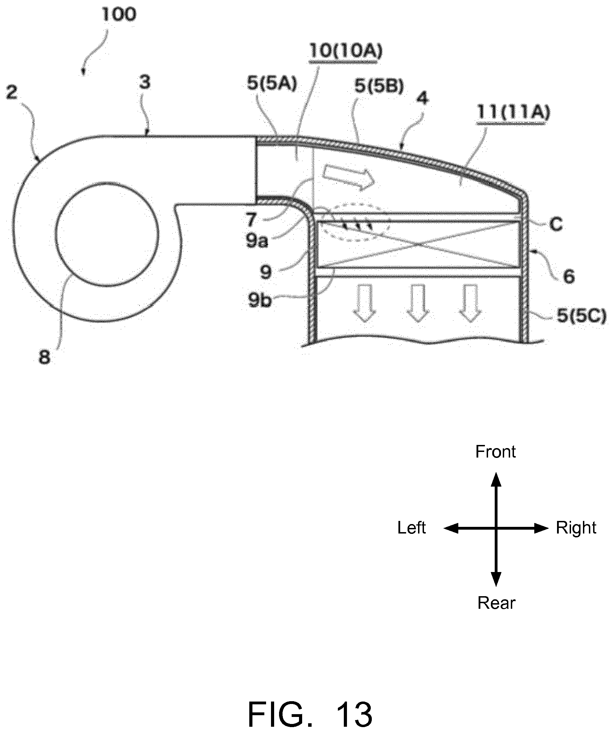

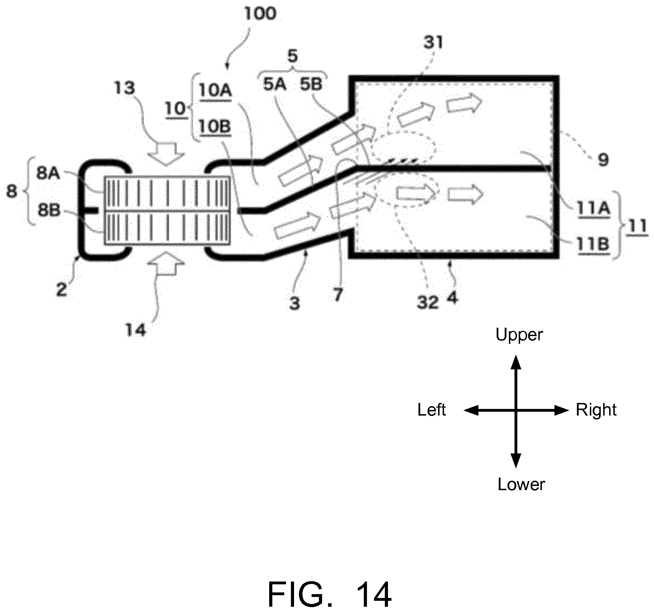

As illustrated in Fig. 14, two air flows, which have been blown out from a blower unit (a blower unit) 2, are directed diagonally upward in a duct section 3 toward an air conditioning unit (a temperature adjustment unit) 6, and then, as illustrated in Fig. 13, the two air flows are turned from the lateral direction of the vehicle to the fore-and-aft direction of the vehicle in a flow turning section 4 upstream of an evaporator 9. Here, as illustrated in Fig. 14, of the two air flows, an upper-layer flow (an air flow in an upper air passage 10A and an upper space 11A) is directed diagonally upward and turned to the fore-and-aft direction while maintaining the momentum whereas a lower-layer flow (an air flow in a lower air passage 10B and a lower space 11B), which has been directed diagonally upward by a partition plate 5, is forcibly turned horizontally. Consequently, in regions 31 and 32 from a terminal end of the duct section 3 to an upstream end of the evaporator 9, a pressure decreased region 31 at a low air pressure (static pressure) appears in the upper space 11A above the partition plate 5, and a pressure increased region 32 at a high air pressure (static pressure) appears in the lower space 11B below the partition plate 5. It is necessary to provide a slight gap C between the partition plate 5 and the evaporator 9 in the air conditioning case to prevent the partition plate 5 and the evaporator 9 from abutting against each other due to vibration of the vehicle. Therefore, the air in the lower space 11B at a high air pressure passes through the gap C between the partition plate 5 and the evaporator 9 and leaks to the upper space 11A at a low air pressure.

As described above, although the two air flows, namely, the upper-layer flow and the lower-layer flow, are intended to be blown separately, the outlet of the blower unit (the blower unit) 2 and the evaporator 9 of the air conditioning unit (the temperature adjustment unit) 6 are vertically displaced from each other so that separation performance of the two air flows may be unfortunately degraded.

### SUMMARY OF THE INVENTION

It is an object of the invention to provide a dual-layer-flow air conditioner for a vehicle in which even when a blower unit and an air conditioning unit are arranged at vertically displaced positions, mixture of two air flows is prevented to secure high separation performance of the two air flows.

According to the invention, a dual-layer-flow air conditioner for a vehicle includes: an intake unit selectively operable in an inside and outside air dual-layer-flow mode to take in both of inside air and outside air simultaneously but separately; a blower unit capable of blowing the inside air and the outside air simultaneously while separating the inside air and the outside air into upper and lower layers; a duct section including an inner passage where the air blown from the blower unit flows, the duct section extending in a lateral direction of the vehicle and being inclined upward to a downstream side; a flow turning section including an inner space having a larger cross-sectional area than the inner passage of the duct section in a flowing direction of the air, the flow turning section being configured to turn a flowing direction of the air, which has flown through the inner passage of the duct section, to a fore-and-aft direction of the vehicle; a partition plate including: a first partition portion inclined upward to the downstream side and configured to divide the inner passage of the duct section into an upper air passage for the outside air and a lower air passage for the inside air; and a second partition portion inclined at an angle smaller than the first partition portion or formed horizontally, and configured to divide the inner space of the flow turning section into an upper space connected to the upper air passage and a lower space connected to the lower air passage; a temperature adjustment unit that accommodates an evaporator inside of which the air, which has flown through the flow turning section, flows, the evaporator having an upstream surface and a downstream surface that face the fore-and-aft direction of the vehicle; and a pressure adjustment configuration located in at least one position among a boundary position between the first partition portion and the second partition portion, a position upstream of the boundary position, and a position downstream of the boundary position, and configured to reduce a pressure difference between the upper space and the lower space.

In the dual-layer-flow air conditioner for a vehicle according to the invention, preferably, the pressure adjustment configuration is a configuration in which from a position upstream of the boundary position to a position downstream of the boundary position, a surface of the first partition portion on the lower air passage side and a surface of the second partition portion on the lower space side are curved in such a manner that the surfaces on the lower air passage side and on the lower space side are concave, and that surfaces on the upper air passage side and on the upper space side are convex. This configuration smoothens a lower surface of the partition plate at the boundary position between a portion (the first partition portion) of the partition plate that is inclined diagonally upward in the duct section and a portion (the second partition portion) of the partition plate that extends substantially horizontally in the flow turning section. Consequently, a pressure difference of the air between the upper space and the lower space in the vicinity of an upstream side of the evaporator is reduced to prevent two flows of the air from mixing and secure high separation performance of the two air flows.

In the dual-layer-flow air conditioner for a vehicle according to the invention, preferably, the pressure adjustment configuration further includes: a configuration in which from a position upstream of the boundary position to a position downstream of the boundary position, the surface of the first partition portion on the upper air passage side and the surface of the second partition portion on the upper space side are curved in such a manner that the surfaces on the lower air passage side and on the lower space side are concave, and that the surfaces on the upper air passage side and on the upper space side are convex; and a configuration in which at a position downstream of the boundary position, a cover stands on the upper space side and is configured to partly cover the upstream surface of the evaporator. In the case where the first partition portion and the second partition portion are curved to make the surfaces on the upper air passage side and on the upper space side convex, part of the air in the upper space, which has passed through the evaporator, may unfortunately flow into the lower space . However, the cover is provided to prevent the air in the upper space from flowing into the lower space downstream of the evaporator so as to eliminate or minimize mixture of the two air flows more reliably.

In the dual-layer-flow air conditioner for a vehicle according to the invention, preferably, the pressure adjustment configuration is a configuration in which at a position upstream of the boundary position, the first partition portion is curved to make the surface on the lower air passage side concave and make the surface on the upper air passage side convex. This configuration smoothens the partition plate at the boundary position between a portion (the first partition portion) of the partition plate that is inclined diagonally upward in the duct section and a portion (the second partition portion) of the partition plate that extends substantially horizontally in the flow turning section. Consequently, a pressure difference of the air between the upper space and the lower space in the vicinity of an upstream side of the evaporator is reduced to prevent two flows of the air from mixing and secure high separation performance of the two air flows.

In the dual-layer-flow air conditioner for a vehicle according to the invention, preferably, the pressure adjustment configuration is a configuration in which a lower-layer air-flow changing member is disposed on the surface of the first partition portion on the lower air passage side and configured to incline an air flow at a smaller angle. The lower-layer air-flow changing member causes a pressure increased region in the lower space to move to an upstream side of the boundary position and be separate from a gap between the partition plate and the evaporator. Consequently, a pressure difference of the air between the upper space and the lower space in the vicinity of an upstream side of the evaporator is reduced to prevent the two air flows from mixing.

In the dual-layer-flow air conditioner for a vehicle according to the invention, preferably, the pressure adjustment configuration is a configuration in which an upper-layer air-flow changing member is disposed on a ceiling of the upper air passage and configured to incline an air flow at a smaller angle. The upper-layer air-flow changing member causes more air to flow to the vicinity of the upper surface of the partition plate in the gap between the partition plate and the evaporator so as to increase air pressure (static pressure). This reduces a pressure difference from air pressure (static pressure) in the lower space to prevent the two air flows from mixing.

In the dual-layer-flow air conditioner for a vehicle according to the invention, preferably, the pressure adjustment configuration is an air-flow turning guide that stands on the partition plate on the upper space side and is configured to turn a flowing direction of part of an air flow, which has flown into the upper space, toward a rear side of the vehicle. Part of the air flowing in the upper space is made to flow to the vicinity of the upper surface of the partition plate so as to increase air pressure (static pressure). This reduces a pressure difference from air pressure (static pressure) in the lower space to prevent the two air flows from mixing.

In the dual-layer-flow air conditioner for a vehicle according to the invention, preferably, the air-flow turning guide includes a horizontal wall on an upper end of the air-flow turning guide. The horizontal wall increases air pressure (static pressure) in a portion of the upper space that is close to the second partition portion so as to reduce a pressure difference of the air between the upper space and the lower space to more reliably prevent the two air flows from mixing.

In the dual-layer-flow air conditioner for a vehicle according to the invention, preferably, the duct section is formed integrally with the flow turning section, and also, the first partition portion is formed integrally with the second partition portion. This smoothens air flows.

The invention provides the dual-layer-flow air conditioner for a vehicle in which even when the blower unit and the air conditioning unit are arranged at vertically displaced positions, mixture of the two air flows is prevented to secure high separation performance of the two air flows.

### BRIEF DESCRIPTION OF THE DRAWINGS

Fig. 1 is a cross-sectional view of an example of a dual-layer-flow air conditioner for a vehicle according to an embodiment, which has a first example of a pressure adjustment configuration.
Fig. 2 is a conceptual diagram illustrating the dual-layer-flow air conditioner for a vehicle in Fig. 1.
Fig. 3 is a cross-sectional view of an example of the dual-layer-flow air conditioner for a vehicle according to this embodiment, which has a second example of the pressure adjustment configuration.
Fig. 4 is a conceptual diagram illustrating the dual-layer-flow air conditioner for a vehicle in Fig. 3.
Fig. 5 is a conceptual diagram of an example of the dual-layer-flow air conditioner for a vehicle according to this embodiment, which has a third example of the pressure adjustment configuration.
Fig. 6 is a cross-sectional view of an example of the dual-layer-flow air conditioner for a vehicle according to this embodiment, which has a fourth example of the pressure adjustment configuration.
Fig. 7 is a conceptual diagram illustrating the dual-layer-flow air conditioner for a vehicle in Fig. 6.
Fig. 8 is a cross-sectional view of an example of the dual-layer-flow air conditioner for a vehicle according to this embodiment, which has a fifth example of the pressure adjustment configuration.
Fig. 9 is a conceptual diagram illustrating the dual-layer-flow air conditioner for a vehicle in Fig. 8.
Fig. 10 is a cross-sectional view of an example of the dual-layer-flow air conditioner for a vehicle according to this embodiment, which has a sixth example of the pressure adjustment configuration.
Fig. 11 is a conceptual diagram illustrating the dual-layer-flow air conditioner for a vehicle in Fig. 10.
Figs. 12A and 12B are perspective views of an air-flow turning guide and its vicinity. Fig. 12A illustrates an example in which the air-flow turning guide only has a lateral wall, and Fig. 12B illustrates an example in which the air-flow turning guide has the lateral wall and a horizontal wall.
Fig. 13 is a cross-sectional view of an example of a dual-layer-flow air conditioner for a vehicle of the related art.
Fig. 14 is a conceptual diagram illustrating the dual-layer-flow air conditioner for a vehicle in Fig. 13.

### DESCRIPTION OF THE PREFERRED EMBODIMENTS

An embodiment of the invention will be described below with reference to the accompanying drawings. The following embodiment is provided for exemplary purposes only and does not limit the invention. In this specification and the drawings, like reference numerals and signs denote identical components. Insofar as the effects of the invention are produced, various modifications are possible.

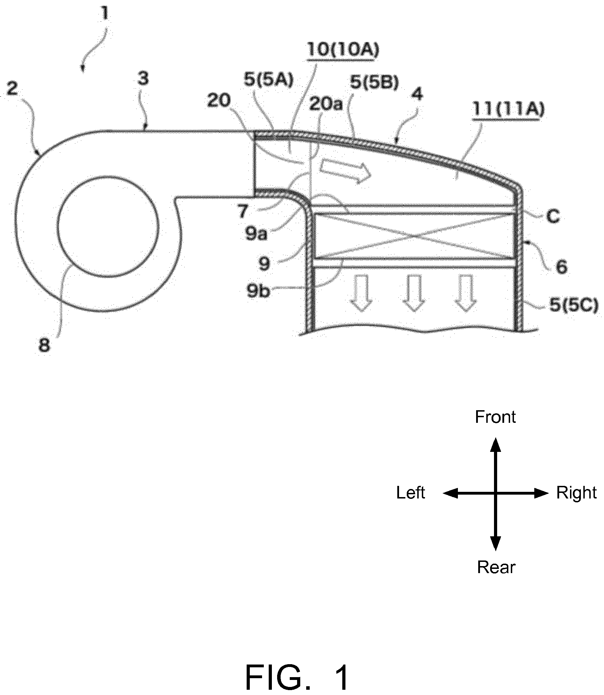

In this specification, Figs. 1, 3, 6, 8, 10, and 13 are horizontal cross-sectional views of dual-layer-flow air conditioners 1 and 100 for a vehicle taken along a line passing inside of part of an upper air passage 10A and an upper space 11A. Figs. 2, 4, 5, 7, 9, 11, and 14 are conceptual diagrams of the dual-layer-flow air conditioners 1 and 100 for a vehicle taken along an upstream surface 9a of an evaporator 9, as viewed toward an upstream side (a vehicle front side), that is, as viewed from the upstream surface 9a of the evaporator 9 in a normal direction of the upstream surface 9a. In order to illustrate wind flows and a configuration of a partition plate 5, a blower unit 2 and a duct section 3 are seen through their case.

Fig. 1 is a cross-sectional view of an example of a dual-layer-flow air conditioner for a vehicle according to this embodiment, which has a first example of a pressure adjustment configuration. Fig. 2 is a conceptual diagram illustrating the dual-layer-flow air conditioner for a vehicle in Fig. 1. A blower 8, described later, is driven to make the dual-layer-flow air conditioner for a vehicle take in and blow the air, as indicated by the arrows in Figs. 1 and 2. The dual-layer-flow air conditioner 1 for a vehicle according to this embodiment includes: an intake unit (not illustrated) selectively operable in an inside and outside air dual-layer-flow mode to take in both of inside air 14 and outside air 15 simultaneously but separately; a blower unit 2 capable of blowing the inside air and the outside air simultaneously while separating the inside air and the outside air into upper and lower layers; a duct section 3 including an inner passage 10 where the air blown from the blower unit 2 flows, the duct section 3 extending in a lateral direction of the vehicle and being inclined upward to a downstream side; a flow turning section 4 including an inner space 11 having a larger cross-sectional area than the inner passage 10 of the duct section 3 in a flowing direction of the air, the flow turning section 4 turning a flowing direction of the air, which has flown through the inner passage 10 of the duct section 3, to a fore-and-aft direction of the vehicle; a partition plate 5 including a first partition portion 5A that is inclined upward to a downstream side and divides the inner passage 10 of the duct section 3 into an upper air passage 10A for the outside air and a lower air passage 10B for the inside air, and a second partition portion 5B that is inclined at an angle smaller than the first partition portion 5A or formed horizontally, and divides the inner space 11 of the flow turning section 4 into an upper space 11A connected to the upper air passage 10A and a lower space 11B connected to the lower air passage 10B; and a temperature adjustment unit 6 that accommodates an evaporator 9 inside of which the air, which has flown through the flow turning section 4, flows, the evaporator 9 having an upstream surface 9a and a downstream surface 9b that face in the fore-and-aft direction of the vehicle. The dual-layer-flow air conditioner 1 for a vehicle includes a pressure adjustment configuration that is located in at least one position among a boundary position 7 between the first partition portion 5A and the second partition portion 5B, a position upstream of the boundary position 7, and a position downstream of the boundary position 7, and reduces a pressure difference between the upper space 11A and the lower space 11B.

The dual-layer-flow air conditioner 1 for a vehicle has the inside and outside air dual-layer-flow mode. In the inside and outside air dual-layer-flow mode, the outside air of low humidity is blown out from a defroster outlet vent, and at the same time, the inside air, which has been circulated and warmed inside the cabin, is blown out from a foot outlet vent. In addition to the inside and outside air dual-layer-flow mode, the dual-layer-flow air conditioner 1 for a vehicle may have an all outside air mode and an all inside air mode. In the all outside air mode, the outside air is blown out from at least one opened outlet vent among a ventilation outlet vent, the defroster outlet vent, and the foot outlet vent. In the all inside air mode, the inside air is blown out from at least one opened outlet vent among the ventilation outlet vent, the defroster outlet vent, and the foot outlet vent.

The intake unit (not illustrated) includes a case in which an outside-air intake port to take in the air outside the cabin (outside air) and an inside-air intake port to take in the air inside the cabin (inside air) are opened. Inside and outside air switching doors to open and close the outside-air intake port and the inside-air intake port are disposed in the case. The inside and outside air switching doors are opened or closed to select a ventilation mode from, for example, the inside and outside air dual-layer-flow mode to take in both of the inside and outside air simultaneously but separately, the all outside air mode to take in the outside air only, and the all inside air mode to take in the inside air only.

The blower unit 2 includes the blower 8 in a scroll casing. As illustrated in Fig. 2, preferably, the blower 8 includes a first impeller 8A and a second impeller 8B. In the inside and outside air dual-layer-flow mode, the first impeller 8A blows the air (outside air) 13 taken in from the outside-air intake port of the intake unit toward the upper air passage 10A. In the inside and outside air dual-layer-flow mode, the second impeller 8B blows the air (inside air) 14 taken in from the inside-air intake port of the intake unit toward the lower air passage 10B.

The duct section 3 is a section to connect the blower unit 2 to the flow turning section 4. The inner passage 10 of the duct section 3 is a hollow cylindrical air passage where the air blown by the blower 8 flows downstream. The inner passage 10 is divided into upper and lower parts by the first partition portion 5A. An upper part of the inner passage 10 above the first partition portion 5A is the upper air passage 10A where the outside air flows in the inside and outside air dual-layer-flow mode. A lower part of the inner passage 10 below the first partition portion 5A is the lower air passage 10B where the inside air flows in the inside and outside air dual-layer-flow mode.

The flow turning section 4 is a section to connect the duct section 3 to the temperature adjustment unit 6. The inner space 11 in the flow turning section 4 is an air passage to change a flowing direction of the air blown from the duct section 3 to a direction toward the upstream surface 9a of the evaporator 9. The inner space 11 is divided into upper and lower parts by the second partition portion 5B. An upper part of the inner space 11 above the second partition portion 5B is the upper space 11A where the outside air flows in the inside and outside air dual-layer-flow mode. A lower part of the inner space 11 below the second partition portion 5B is the lower space 11B where the inside air flows in the inside and outside air dual-layer-flow mode.

The partition plate 5 at least includes the first partition portion 5A disposed in the inner passage 10 of the duct section 3 and the second partition portion 5B disposed in the inner space 11 of the flow turning section 4. Although the second partition portion 5B is formed horizontally in Fig. 2, the second partition portion 5B may be inclined at an angle smaller than the first partition portion 5A. In this specification, being inclined at an angle smaller than the first partition portion 5A means having an inclination angle smaller than the first partition portion 5A, and includes being inclined upward to a downstream side, that is, having plus inclination, and being inclined downward to the downstream side, that is, having minus inclination. In addition to the first partition portion 5A and the second partition portion 5B, preferably, the partition plate 5 includes a third partition portion 5C disposed in the temperature adjustment unit 6.

In the dual-layer-flow air conditioner 1 for a vehicle according to this embodiment, the duct section 3 is preferably formed integrally with the flow turning section 4, and also, the first partition portion 5A is preferably formed integrally with the second partition portion 5B. This smoothens air flows.

In the temperature adjustment unit 6, as necessary, the evaporator 9 cools the air sent from the flow turning section 4. The temperature adjustment unit 6 may further accommodate a heating heat exchanger (not illustrated) downstream of the evaporator 9.

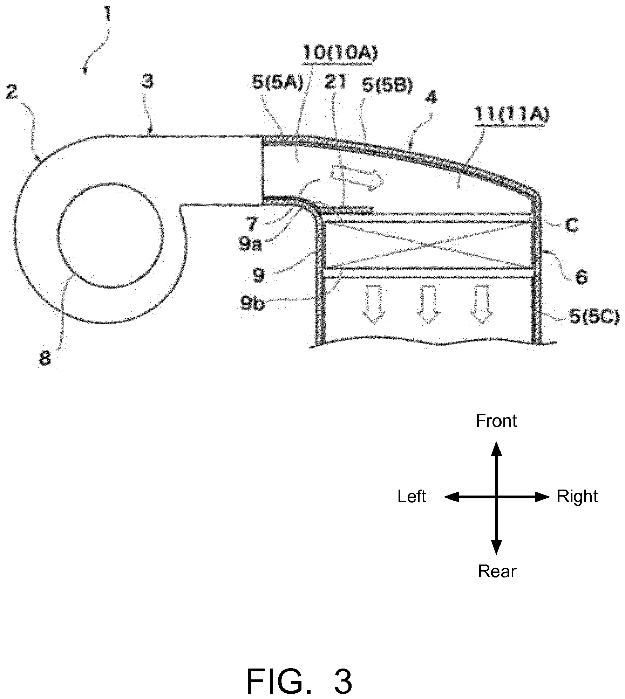

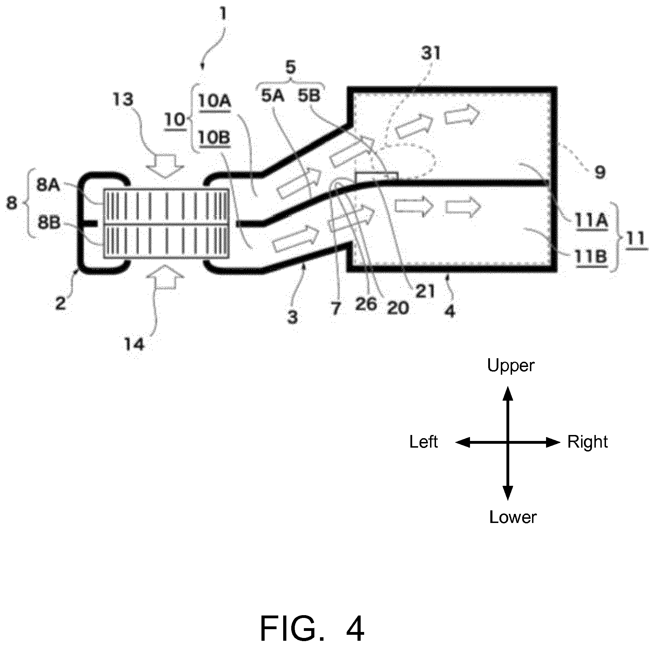

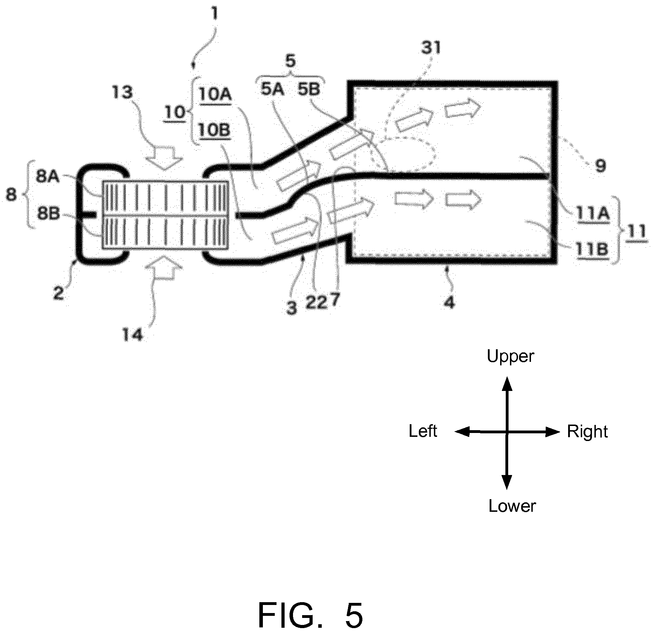

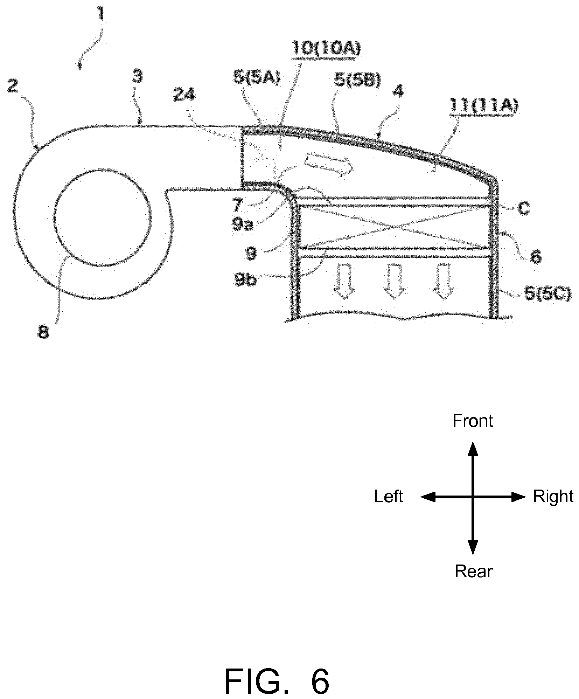

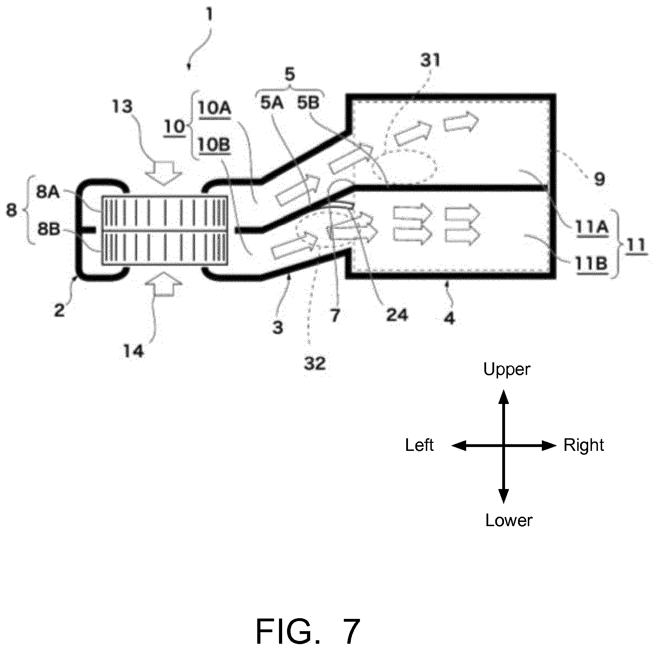

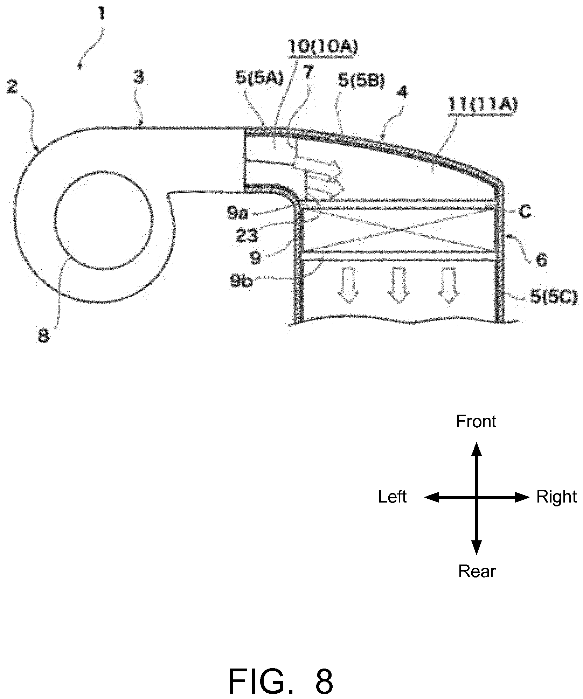

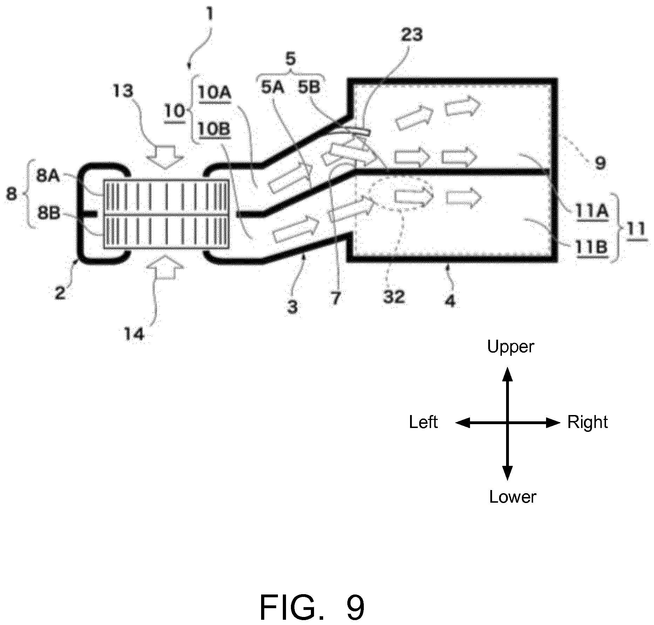

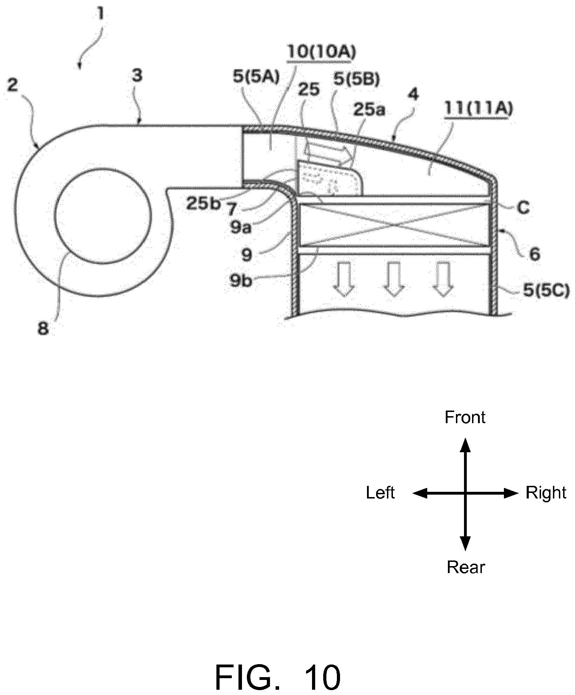

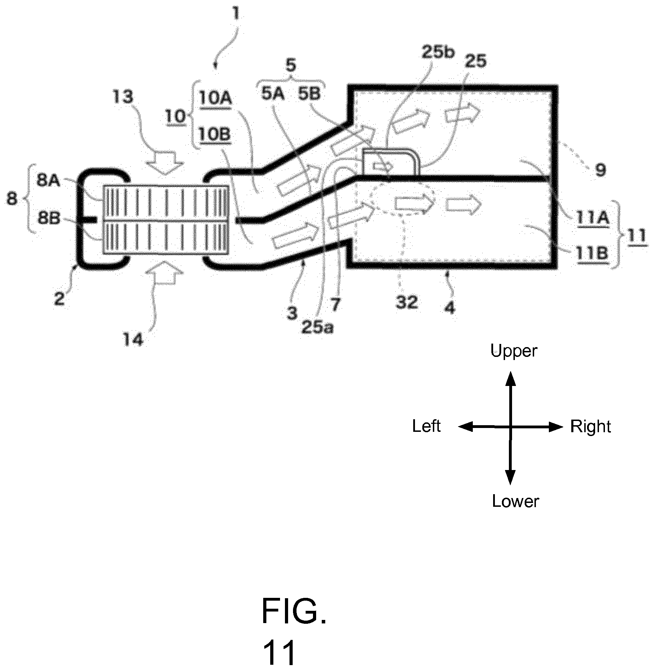

The pressure adjustment configuration is intended to reduce a pressure difference between the upper space 11A and the lower space 11B. This configuration prevents the air in the lower space 11B from flowing into the upper space 11A. As a result, an inside-air mixture rate can be made lower than a limit inside-air mixture rate 20% to prevent the air blown out from the defroster outlet vent from causing windshield fogging. The pressure adjustment configuration includes, for example, a form to prevent an increase of air pressure (static pressure) in the lower space 11B (including a first example of the pressure adjustment configuration illustrated in Figs. 1 and 2, a second example of the pressure adjustment configuration illustrated in Figs. 3 and 4, and a third example of the pressure adjustment configuration illustrated in Fig. 5), a form to move an increased region of air pressure (static pressure) in the lower space 11B toward an upstream side (including a fourth example of the pressure adjustment configuration illustrated in Figs. 6 and 7), and a form to increase air pressure (static pressure) in the upper space 11A (including a fifth example of the pressure adjustment configuration illustrated in Figs. 8 and 9, and a sixth example of the pressure adjustment configuration illustrated in Figs. 10 and 11). Next, the examples of the pressure adjustment configuration will be described more specifically.

### (First Example of Pressure Adjustment Configuration)

As illustrated in Figs. 1 and 2, in the dual-layer-flow air conditioner 1 for a vehicle according to this embodiment, the pressure adjustment configuration is preferably a configuration 20 in which from a position upstream of the boundary position 7 to a position downstream of the boundary position 7, a surface of the first partition portion 5A on the lower air passage 10B side and a surface of the second partition portion 5B on the lower space 11B side are curved in such a manner that the surfaces on the lower air passage 10B side and on the lower space 11B side are concave, and that surfaces on the upper air passage 10A side and on the upper space 11A side are convex. This configuration 20 smoothens a lower surface of the partition plate 5 at the boundary position 7 between a portion (the first partition portion 5A) of the partition plate 5 that is inclined diagonally upward in the duct section 3 and a portion (the second partition portion 5B) of the partition plate 5 that extends substantially horizontally in the flow turning section 4 so as to prevent air pressure (static pressure) in the lower space 11B from increasing. Consequently, a pressure difference of the air between the upper space 11A and the lower space 11B in the vicinity of an upstream side of the evaporator 9 is reduced to prevent two flows of the air from mixing and secure high separation performance of the two air flows.

In the case of adopting, as the pressure adjustment configuration, the configuration 20 in which the surface of the first partition portion 5A on the lower air passage 10B side and the surface of the second partition portion 5B on the lower space 11B side are curved, the first partition portion 5A and the second partition portion 5B may be formed, for example, as illustrated in Figs. 1 and 2, with an edge portion 20a at the boundary position 7 on the upper air passage 10A side and on the upper space 11A side so that the partition plate 5 is increased in thickness in the vicinity of the boundary position 7.

### (Second Example of Pressure Adjustment Configuration)

Fig. 3 is a cross-sectional view of an example of the dual-layer-flow air conditioner for a vehicle according to this embodiment, which has a second example of the pressure adjustment configuration. Fig. 4 is a conceptual diagram illustrating the dual-layer-flow air conditioner for a vehicle in Fig. 3. As illustrated in Figs. 3 and 4, in the dual-layer-flow air conditioner 1 for a vehicle according to this embodiment, the pressure adjustment configuration is preferably not only the configuration 20 in which the surface of the first partition portion 5A on the lower air passage 10B side and the surface of the second partition portion 5B on the lower space 11B side are curved but also a configuration 26 in which from a position upstream of the boundary position 7 to a position downstream of the boundary position 7, a surface of the first partition portion 5A on the upper air passage 10A side and a surface of the second partition portion 5B on the upper space 11A side are curved in such a manner that the surfaces on the lower air passage 10B side and on the lower space 11B side are concave, and that the surfaces on the upper air passage 10A side and on the upper space 11A side are convex, and a configuration in which at a position downstream of the boundary position 7, a cover 21 stands on the upper space 11A side and partly covers the upstream surface 9a of the evaporator 9. That is, the second example of the pressure adjustment configuration includes the configurations 20 and 26 in which both of the upper and lower surfaces of the first partition portion 5A and the second partition portion 5B are curved, and the cover 21. In the case where the first partition portion 5A and the second partition portion 5B are curved to make the surfaces on the upper air passage 10A side and on the upper space 11A side convex, the upper space 11A becomes larger than the lower space 11B in comparison with the case of not making the surfaces on the upper air passage 10A side and on the upper space 11A side convex (for example, the case of having the edge portion 20a on the upper air passage 10A side and on the upper space 11A side). In this case, when the shape of the third partition portion 5C is not curved but located at the same position as the second partition portion 5B in the vertical direction, the upper-layer air (for example, the outside air 13), which has passed by an enlarged region of the upper space 11A, passes through the evaporator 9 and then flows into the lower space 11B. In other words, part of the outside air 13 flows into the inside air 14, thus making it difficult to secure high separation performance. In view of this, as in this embodiment, the cover 21 is provided to prevent the air (the outside air 13) in the upper space 11A from flowing into the air (the inside air 14) flowing in the lower space 11B downstream of the evaporator 9 so as to eliminate or minimize mixture of the two air flows more reliably.

In the case of including the configurations 20 and 26 in which both of the upper and lower surfaces of the first partition portion 5A and the second partition portion 5B are curved, and the cover 21 as the pressure adjustment configuration, the first partition portion 5A and the second partition portion 5B are preferably formed in such a manner that the edge portion 20a (illustrated in Figs. 1 and 2) is not provided at the boundary position 7 on the upper air passage 10A side and on the upper space 11A side, and that the partition plate 5 is made to have a substantially constant thickness, as illustrated in Figs. 3 and 4. In the case of forming the partition plate 5 by injection molding of a resin material, making the thickness substantially constant eliminates or minimizes unintended deformation at a cooling step after injection molding.

Preferably, the cover 21 stands on the second partition portion 5B. The cover 21 is preferably disposed at a position where the first partition portion 5A and the second partition portion 5B are curved to make the surfaces on the upper air passage 10A side and on the upper space 11A side convex, so that the cover 21 covers the upper space 11A enlarged in the vertical direction by curving the first partition portion 5A and the second partition portion 5B.

### (Third Example of Pressure Adjustment Configuration)

Fig. 5 is a conceptual diagram of an example of the dual-layer-flow air conditioner for a vehicle according to this embodiment, which has a third example of the pressure adjustment configuration. As illustrated in Fig. 5, in the dual-layer-flow air conditioner 1 for a vehicle according to this embodiment, the pressure adjustment configuration is preferably a configuration 22 in which at a position upstream of the boundary position 7, the first partition portion 5A is curved to make the surface on the lower air passage 10B side concave and make the surface on the upper air passage 10A side convex. This configuration 22 smoothens the partition plate 5 at the boundary position 7 between a portion (the first partition portion 5A) of the partition plate 5 that is inclined diagonally upward in the duct section 3 and a portion (the second partition portion 5B) of the partition plate 5 that extends substantially horizontally in the flow turning section 4 so as to prevent air pressure (static pressure) in the lower space 11B from increasing. Consequently, a pressure difference of the air between the upper space 11A and the lower space 11B in the vicinity of an upstream side of the evaporator 9 is reduced to prevent the two air flows from mixing and secure high separation performance of the two air flows.

### (Fourth Example of Pressure Adjustment Configuration)

Fig. 6 is a cross-sectional view of an example of the dual-layer-flow air conditioner for a vehicle according to this embodiment, which has a fourth example of the pressure adjustment configuration. Fig. 7 is a conceptual diagram illustrating the dual-layer-flow air conditioner for a vehicle in Fig. 6. In Fig. 6, a cutaway view of a lower-layer air-flow changing member 24 is indicated with a dotted line. As illustrated in Figs. 6 and 7, in the dual-layer-flow air conditioner 1 for a vehicle according to this embodiment, the pressure adjustment configuration is preferably a configuration in which the lower-layer air-flow changing member 24 is disposed on the surface of the first partition portion 5A on the lower air passage 10B (illustrated in Fig. 7) side and inclines the air flow at a smaller angle. As illustrated in Fig. 7, the lower-layer air-flow changing member 24 causes a pressure increased region 32 in the lower space 11B to move to an upstream side of the boundary position 7 and be separate from a gap C between the partition plate 5 and the evaporator 9. Consequently, a pressure difference of the air between the upper space 11A and the lower space 11B in the vicinity of an upstream side of the evaporator 9 is reduced to prevent the two air flows from mixing.

Preferably, the lower-layer air-flow changing member 24 is a plate-shaped member. Preferably, the lower-layer air-flow changing member 24 is inclined at a smaller angle than the first partition portion 5A or formed substantially horizontally. Fig. 7 illustrates an example in which the lower-layer air-flow changing member 24 is inclined downward to a downstream side, that is, has minus inclination. However, the invention is not limited to this configuration. The lower-layer air-flow changing member 24 may be inclined upward to a downstream side, that is, may have plus inclination (not illustrated) or the lower-layer air-flow changing member 24 may be horizontal (not illustrated).

### (Fifth Example of Pressure Adjustment Configuration)

Fig. 8 is a cross-sectional view of an example of the dual-layer-flow air conditioner for a vehicle according to this embodiment, which has a fifth example of the pressure adjustment configuration. Fig. 9 is a conceptual diagram illustrating the dual-layer-flow air conditioner for a vehicle in Fig. 8. In the dual-layer-flow air conditioner 1 for a vehicle according to this embodiment, the pressure adjustment configuration is preferably a configuration in which an upper-layer air-flow changing member 23 is disposed on the ceiling of the upper air passage 10A and inclines the air flow at a smaller angle. The upper-layer air-flow changing member 23 causes more air to flow to the vicinity of the upper surface of the partition plate 5 in the gap C between the partition plate 5 and the evaporator 9 so as to increase air pressure (static pressure). This reduces a pressure difference from air pressure (static pressure) in the lower space 11B to prevent the two air flows from mixing.

Preferably, the upper-layer air-flow changing member 23 is a plate-shaped member. Preferably, the upper-layer air-flow changing member 23 is inclined at a smaller angle than the ceiling of the duct section 3 or formed substantially horizontally. Fig. 9 illustrates an example in which the upper-layer air-flow changing member 23 is inclined downward to a downstream side, that is, has minus inclination. However, the invention is not limited to this configuration. The upper-layer air-flow changing member 23 may be inclined upward to a downstream side, that is, may have plus inclination (not illustrated) or the upper-layer air-flow changing member 23 may be horizontal (not illustrated).

### (Sixth Example of Pressure Adjustment Configuration)

Fig. 10 is a cross-sectional view of an example of the dual-layer-flow air conditioner for a vehicle according to this embodiment, which has a sixth example of the pressure adjustment configuration. Fig. 11 is a conceptual diagram illustrating the dual-layer-flow air conditioner for a vehicle in Fig. 10. In the dual-layer-flow air conditioner 1 for a vehicle according to this embodiment, the pressure adjustment configuration is preferably an air-flow turning guide 25 that stands on the partition plate 5 on the upper space 11A side and turns a flowing direction of part of an air flow, which has flown into the upper space 11A, toward a rear side of the vehicle.

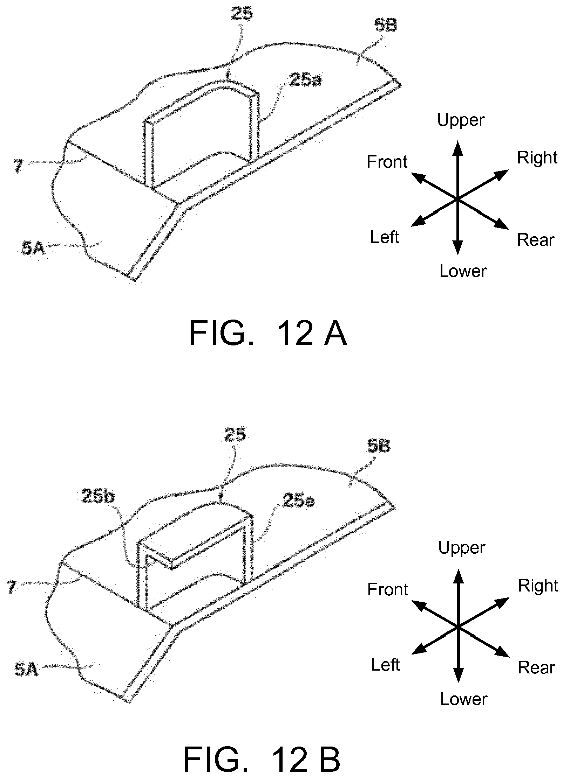

Figs. 12A and 12B are perspective views of the air-flow turning guide 25 and its vicinity. Fig. 12A illustrates a form in which the air-flow turning guide 25 only has a lateral wall, and Fig. 12B illustrates a form in which the air-flow turning guide 25 has the lateral wall and a horizontal wall. As illustrated in Figs. 12A and 12B, the air-flow turning guide 25 has a lateral wall 25a that stands on the partition plate 5 on the upper space 11A side. Along the lateral wall 25a of the air-flow turning guide 25, part of the air flowing in the upper space 11A is made to flow to the vicinity of the upper surface of the partition plate 5 so as to increase the air pressure (static pressure). This reduces a pressure difference from the air pressure (static pressure) in the lower space 11B to prevent the two air flows from mixing.

As illustrated in Fig. 12A, the air-flow turning guide 25 may only include the lateral wall 25a without a horizontal wall 25b. However, in the dual-layer-flow air conditioner 1 for a vehicle according to this embodiment, as illustrated in Fig. 12B, the air-flow turning guide 25 more preferably includes the horizontal wall 25b on an upper end thereof. Figs. 10 and 11 illustrate an example in which the air-flow turning guide 25 includes the lateral wall 25a and the horizontal wall 25b, as illustrated in Fig. 12B. The horizontal wall 25b increases air pressure (static pressure) in a region of the upper space 11A that is close to the second partition portion 5B so as to reduce a pressure difference of the air between the upper space 11A and the lower space 11B to more reliably prevent the two air flows from mixing.

The dual-layer-flow air conditioner for a vehicle according to this embodiment may have a plurality of pressure adjustment configurations. Examples having a plurality of pressure adjustment configurations include: an example having the first-example and fourth-example configurations as the pressure adjustment configuration; an example having the first-example and fifth-example configurations; an example having the first-example and sixth-example configurations; an example having the first-example, fourth-example, and fifth-example configurations; an example having the first-example, fourth-example, and sixth-example configurations; an example having the first-example, fifth-example, and sixth-example configurations; an example having the first-example, fourth-example, fifth-example, and sixth-example configurations; an example having the second-example and fourth-example configurations; an example having the second-example and fifth-example configurations; an example having the second-example and sixth-example configurations; an example having the second-example, fourth-example, and fifth-example configurations; an example having the second-example, fourth-example, and sixth-example configurations; an example having the second-example, fifth-example, and sixth-example configurations; an example having the second-example, fourth-example, fifth-example, and sixth-example configurations; an example having the third-example and fourth-example configurations; an example having the third-example and fifth-example configurations; an example having the third-example and sixth-example configurations; an example having the third-example, fourth-example, and fifth-example configurations; an example having the third-example, fourth-example, and sixth-example configurations; an example having the third-example, fifth-example, and sixth-example configurations; an example having the third-example, fourth-example, fifth-example, and sixth-example configurations; an example having the fourth-example and fifth-example configurations; an example having the fourth-example and sixth-example configurations; an example having the fourth-example, fifth-example, and sixth-example configurations; and an example having the fifth-example and sixth-example configurations.

In the above description, the duct section 3 and the flow turning section 4 are preferably formed integrally, and the first partition portion 5A and the second partition portion 5B are preferably formed integrally. However, the dual-layer-flow air conditioner for a vehicle according to this embodiment is not limited to this configuration. The dual-layer-flow air conditioner for a vehicle according to this embodiment does not exclude an example in which the duct section 3 and the flow turning section 4 are formed as individual components, the flow turning section 4 and the temperature adjustment unit 6 are integrally formed, and the first partition portion 5A and the second partition portion 5B are formed as individual components. In another example, the duct section 3 and the flow turning section 4 may be formed as individual components, and the first partition portion 5A and the second partition portion 5B may be formed integrally. The duct section 3, the flow turning section 4, the temperature adjustment unit 6, and the partition plate 5 are selectively formed integrally or as individual components as suited in view of factors such as productivity and cost.

### Description of Reference Numerals and Signs

1: dual-layer-flow air conditioner for vehicle
2: blower unit
3: duct section
4: flow turning section
5: partition plate
5A: first partition portion
5B: second partition portion
5C: third partition portion
6: temperature adjustment unit
7: boundary position
8: blower
8A: first impeller
8B: second impeller
9: evaporator
9a: upstream surface
9b: downstream surface
10: inner passage
10A: upper air passage
10B: lower air passage
11: inner space
11A: upper space
11B: lower space
13: air (outside air)
14: air (inside air)
20: configuration
20a: edge portion
21: cover
22: configuration
23: upper-layer air-flow changing member
24: lower-layer air-flow changing member
25: air-flow turning guide
25a: lateral wall
25b: horizontal wall
26: configuration
31: pressure decreased region
32: pressure increased region
C: gap

## Claims

1. A dual-layer-flow air conditioner (1) for a vehicle, the air conditioner comprising:
an intake unit selectively operable in an inside and outside air dual-layer-flow mode to take in both of inside air and outside air simultaneously but separately;
a blower unit (2) capable of blowing the inside air (14) and the outside air (13) simultaneously while separating the inside air (14) and the outside air (13) into upper and lower layers;
a duct section (3) comprising an inner passage (10) where the air blown from the blower unit (2) flows, the duct section (3) extending in a lateral direction of the vehicle and being inclined upward to a downstream side;
a flow turning section (4) comprising an inner space (11) having a larger cross-sectional area than the inner passage (10) of the duct section (3) in a flowing direction of the air, the flow turning section (4) being configured to turn a flowing direction of the air, which has flown through the inner passage (10) of the duct section (3), to a fore-and-aft direction of the vehicle;
a partition plate (5) comprising:
a first partition portion (5A) inclined upward to the downstream side and configured to divide the inner passage (10) of the duct section (3) into an upper air passage (10A) for the outside air and a lower air passage (10B) for the inside air; and
a second partition portion (5B) inclined at an angle smaller than the first partition portion (5A) or formed horizontally, and configured to divide the inner space (11) of the flow turning section (4) into an upper space (11A) connected to the upper air passage (10A) and a lower space (11B) connected to the lower air passage (10B);
a temperature adjustment unit (6) that accommodates an evaporator (9) inside of which the air, which has flown through the flow turning section (4), flows, the evaporator (9) having an upstream surface (9a) and a downstream surface (9b) that face the fore-and-aft direction of the vehicle; and
a pressure adjustment configuration located in at least one position among a boundary position (7) between the first partition portion (5A) and the second partition portion (5B), a position upstream of the boundary position (7), and a position downstream of the boundary position (7), and configured to reduce a pressure difference between the upper space (11A) and the lower space (11B).

2. The dual-layer-flow air conditioner for a vehicle according to claim 1, **characterized in that** the pressure adjustment configuration comprises a configuration (20) in which from a position upstream of the boundary position (7) to a position downstream of the boundary position (7), a surface of the first partition portion (5A) on the lower air passage (10B) side and a surface of the second partition portion (5B) on the lower space (11B) side are curved in such a manner that the surfaces on the lower air passage (10B) side and on the lower space (11B) side are concave, and that surfaces on the upper air passage (10A) side and on the upper space (11A) side are convex.

3. The dual-layer-flow air conditioner for a vehicle according to claim 2, **characterized in that** the pressure adjustment configuration further comprises:
a configuration (26) in which from a position upstream of the boundary position (7) to a position downstream of the boundary position (7), the surface of the first partition portion (5A) on the upper air passage (10A) side and the surface of the second partition portion (5B) on the upper space (11A) side are curved in such a manner that the surfaces on the lower air passage (10B) side and on the lower space (11B) side are concave, and that the surfaces on the upper air passage (10A) side and on the upper space (11A) side are convex; and
a configuration in which at a position downstream of the boundary position (7), a cover (21) stands on the upper space (11A) side and is configured to partly cover the upstream surface (9a) of the evaporator (9).

4. The dual-layer-flow air conditioner for a vehicle according to claim 1, **characterized in that** the pressure adjustment configuration comprises a configuration (22) in which at a position upstream of the boundary position (7), the first partition portion (5A) is curved to make the surface on the lower air passage (10B) side concave and make the surface on the upper air passage (10A) side convex.

5. The dual-layer-flow air conditioner for a vehicle according to any one of claims 1 to 4, **characterized in that** the pressure adjustment configuration comprises a configuration in which a lower-layer air-flow changing member (24) is disposed on the surface of the first partition portion (5A) on the lower air passage (10B) side and configured to incline an air flow at a smaller angle.

6. The dual-layer-flow air conditioner for a vehicle according to any one of claims 1 to 5, **characterized in that** the pressure adjustment configuration comprises a configuration in which an upper-layer air-flow changing member (23) is disposed on a ceiling of the upper air passage (10A) and configured to incline an air flow at a smaller angle.

7. The dual-layer-flow air conditioner for a vehicle according to any one of claims 1 to 6, **characterized in that** the pressure adjustment configuration comprises an air-flow turning guide (25) that stands on the partition plate (5) on the upper space (11A) side and is configured to turn a flowing direction of part of an air flow, which has flown into the upper space (11A), toward a rear side of the vehicle.

8. The dual-layer-flow air conditioner for a vehicle according to claim 7, **characterized in that** the air-flow turning guide (25) comprises a horizontal wall (25b) on an upper end of the air-flow turning guide (25).

9. The dual-layer-flow air conditioner for a vehicle according to any one of claims 1 to 8, **characterized in that** the duct section (3) is formed integrally with the flow turning section (4), and also, the first partition portion (5A) is formed integrally with the second partition portion (5B).
